# EUROPEAN PATENT APPLICATION

(11) **EP 2 244 150 A2**
(43) Date of publication of application: **27.10.2010**
(21) Application number: 09175871.4
(22) Date of filing: 12.11.2009
(51) Int. Cl.: G05D 1/00

(54) **Methods for generating a flight plan for an unmanned aerial vehicle based on a predicted camera path**

(30) Priority: 18.11.2008 US 273135
(71) Applicant: Honeywell International Inc., Morristown, NJ 07962 (US)
(72) Inventor: Feigh, Karen, Morristown, NJ 07962-2245 (US); Dorneich, Michael Christian, Morristown, NJ 07962-2245 (US); Whitlow, Stephen, Morristown, NJ 07962-2245 (US); Rye, Jeffrey Matthew, Morristown, NJ 07962-2245 (US)
(74) Representative: Buckley, Guy Julian

(57) **Abstract**

Methods are provided for generating a flight plan (500) for an aerial vehicle (100) equipped with a surveillance module (106) by using a control unit (200) having a display device (202). A method comprises graphically identifying, on a map (300) displayed on the display device (202), a desired target (304, 306, 308, 310) for the surveillance module (106). A flight plan (500) generated based on the desired target (304, 306, 308, 310) such that a predicted camera path (600) for the surveillance module (106) overlaps the desired target (304, 306, 308, 310).

## Description

### TECHNICAL FIELD

The subject matter described herein relates generally to route planning for surveillance vehicles, and more particularly, embodiments of the subject matter relate to methods for generating a flight plan for an unmanned aerial vehicle based upon desired surveillance targets.

### BACKGROUND

Unmanned aerial vehicles are currently used in a number of military and civilian applications. One common application involves using the unmanned aerial vehicle for video and/or photographic surveillance of a particular object or area of interest. In general, these vehicles may either be operated manually (e.g., via a remote control) or autonomously based upon a predetermined flight plan.

Most current flight planning tools for unmanned aerial vehicles require an operator to manually define a series of waypoints, that is, a series of points in three-dimensional space that define the desired flight path for the vehicle. However, some operators may not have familiarity or understanding of the particular nuances of specifying waypoints and how the series of waypoints translates to the actual flight path during operation. For example, physical limitations of the vehicle may affect the vehicle's ability to precisely traverse each waypoint of the flight plan. Additionally, the goal of the flight plan is often to garner intelligence about a particular object or region rather than simply fly the vehicle through a series of waypoints. However, current flight planning tools do not provide any means for determining the predicted camera path based on the waypoints in the flight plan.

### BRIEF SUMMARY

A method is provided for generating a flight plan for an aerial vehicle having a surveillance module using a control unit having a display device. The method comprises graphically identifying, on a map displayed on the display device, a desired target for the surveillance module, and generating the flight plan such that a predicted camera path for the surveillance module overlaps the desired target.

In another embodiment, another method is provided for creating a flight plan for an aerial vehicle having a camera. The method comprises identifying a plurality of surveillance targets for the camera on a display device associated with the aerial vehicle, and generating a plurality of waypoints for use as the flight plan based on the plurality of surveillance targets.

### BRIEF DESCRIPTION OF THE DRAWINGS

Embodiments of the subject matter will hereinafter be described in conjunction with the following drawing figures, wherein like numerals denote like elements, and

FIG. 1 is a block diagram of an unmanned aerial vehicle in accordance with one embodiment;

FIG. 2 is a block diagram of an exemplary control unit suitable for use with the unmanned aerial vehicle of FIG. 1;

FIG. 3 a schematic view of an exemplary map suitable for use with the control unit of FIG. 2 in accordance with one embodiment;

FIG. 4 is a flow diagram of flight plan generation process suitable for use with the control unit of FIG. 2 in accordance with one embodiment;

FIG. 5 is a schematic view of an exemplary map, suitable for use with the flight plan generation process of FIG. 4, showing a generated flight plan in accordance with one embodiment; and

FIG. 6 is a schematic view of an exemplary map, suitable for use with the flight plan generation process of FIG. 4, showing a predicted camera path in accordance with one embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting. For example, terms such as "first", "second" and other such numerical terms referring to structures do not imply a sequence or order unless clearly indicated by the context.

For the sake of brevity, conventional techniques related to graphics and image processing, navigation, flight planning, unmanned vehicle controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Technologies and concepts discussed herein relate generally to route planning or travel planning for autonomous operation of surveillance vehicles. Although the subject matter may be described herein in the context of an unmanned aerial vehicle, various aspects of the subject matter may be implemented in other unmanned vehicles, for example, unmanned ground vehicles or unmanned underwater vehicles, or any other surveillance vehicle (manned or unmanned) that is capable of autonomous operation (e.g., equipped with autopilot or a comparable feature), and the subject matter is not intended to be limited to use with any particular vehicle. As described below, in an exemplary embodiment, a ground control station is configured to display a map of an area proximate the unmanned aerial vehicle and allow a user to identify points on the map as desired surveillance targets. Based upon the desired surveillance targets, the ground control station generates a flight plan for the unmanned aerial vehicle such that predicted path for a camera onboard the unmanned aerial vehicle covers and/or overlaps the desired surveillance targets. The generated flight plan may then be uploaded and/or transferred to the unmanned aerial vehicle for subsequent autonomous operation.

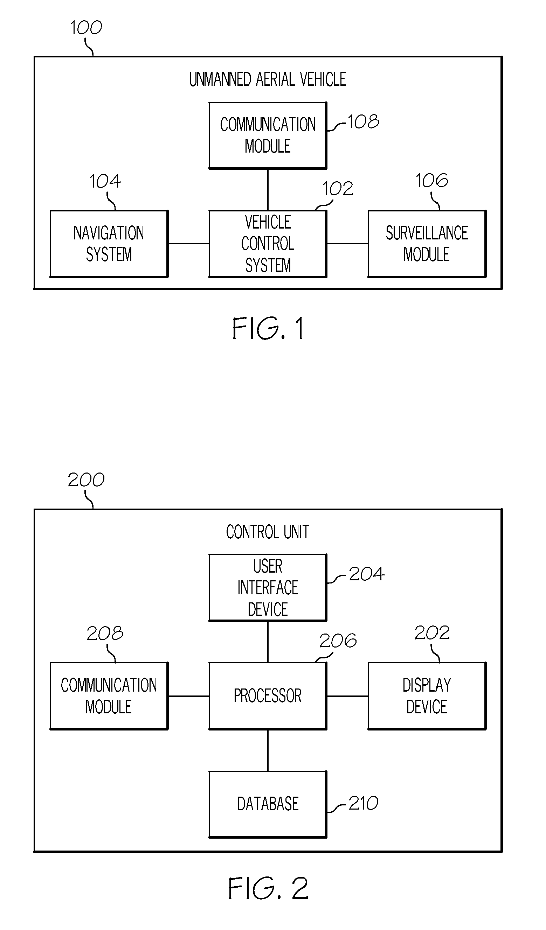

FIG. 1 depicts an exemplary embodiment of an unmanned aerial vehicle 100 suitable for use in an aerial vehicle surveillance system. In an exemplary embodiment, the unmanned aerial vehicle 100 is a micro air vehicle (MAV) capable of operation in accordance with a predetermined flight plan obtained and/or downloaded from an associated ground control station, as described below. The unmanned aerial vehicle 100 may include, without limitation, a vehicle control system 102, a navigation system 104, a surveillance module 106, and a communication module 108. It should be understood that FIG. 1 is a simplified representation of an unmanned aerial vehicle 100 for purposes of explanation and ease of description, and FIG. 1 is not intended to limit the application or scope of the subject matter in any way. In practice, the unmanned aerial vehicle 100 may include numerous other devices and components for providing additional functions and features, as will be appreciated in the art.

In an exemplary embodiment, the vehicle control system 102 is coupled to the navigation system 104, the surveillance module 106, and the communication module 108. The vehicle control system 102 generally represents the hardware, software, firmware, processing logic, and/or other components of the unmanned aerial vehicle 100 that enable the unmanned aerial vehicle 100 to achieve unmanned operation and/or flight based upon a predetermined flight plan in order to achieve video and/or other surveillance of a desired surveillance target, as will be appreciated in the art and described in greater detail below. In this regard, the vehicle control system 102 and the communication module 108 are cooperatively configured to allow the transferring and/or downloading of a flight plan from an associated ground control station to the vehicle control system 102 along with the transferring and/or uploading of surveillance data (e.g., video data or photographic data) from the surveillance module 106 to the ground control station, as will be appreciated in the art.

In an exemplary embodiment, the unmanned aerial vehicle 100 operates in conjunction with an associated ground control station or control unit, as described in greater detail below. In this regard, the unmanned aerial vehicle 100 and the associated ground control station are preferably configured to support bi-directional peer-to-peer communication. The communication module 108 generally represents the hardware, software, firmware, processing logic, and/or other components that enable bi-directional communication between the unmanned aerial vehicle 100 and the associated ground control station or control unit, as will be appreciated in the art. In this regard, the communication module 108 may support one or more wireless data communication protocols. Any number of suitable wireless data communication protocols, techniques, or methodologies may be supported by the communication module 108, as will be appreciated in the art. In addition, the communication module 108 may include a physical interface to enable a direct physical communication medium between the unmanned aerial vehicle 100 and the associated ground control station.

In an exemplary embodiment, the navigation system 104 is suitably configured to support unmanned flight and/or operation of the unmanned aerial vehicle. In this regard, the navigation system 104 may be realized as a global positioning system (GPS), inertial reference system (IRS), or a radio-based navigation system (e.g., VHF omni-directional radio range (VOR) or long range aid to navigation (LORAN)), and may include one or more sensors suitably configured to support operation of the navigation system 104, as will be appreciated in the art. In an exemplary embodiment, the navigation system 104 is capable of obtaining and/or determining the current location (e.g., the latitude and longitude), altitude, and heading of the unmanned aerial vehicle 100 and providing these navigational parameters to the vehicle control system 102 to support unmanned flight and/or unmanned operation of unmanned aerial vehicle 100.

In an exemplary embodiment, the surveillance module 106 is realized as at least one camera adapted to capture surveillance data (e.g., images and/or video) for a viewing region proximate the unmanned aerial vehicle 100 during operation. In this regard, the camera may be realized as a video camera, an infrared camera, a radar-based imaging device, a multi-spectral imaging device, or another suitable imaging camera or device. For example, in accordance with one embodiment, the surveillance module 106 comprises a first video camera that is positioned and/or angled downward (e.g., the camera lens is directed beneath the unmanned aerial vehicle) and a second video camera positioned and/or angled such that the lens points outward from the unmanned aerial vehicle 100 aligned with the horizontal line of travel (e.g., the camera lens is directed straight out or forward). In an exemplary embodiment, the vehicle control system 102 and the communication module 108 are cooperatively configured to allow the transferring and/or uploading of surveillance data (e.g., video data or photographic data) from the surveillance module 106 to a control unit or ground control station, as will be appreciated in the art.

FIG. 2 depicts an exemplary embodiment of a control unit 200 suitable for operation with the unmanned aerial vehicle 100. The control unit 200 may include, without limitation, a display device 202, a user interface device 204, a processor 206, a communication module 208 and at least one database 210 suitably configured to support operation of the control unit 200 as described in greater detail below. In an exemplary embodiment, the control unit 200 is realized as a ground control station and the control unit 200 is associated with the unmanned aerial vehicle 100 as described above. That is, the communication module 208 is suitably configured for bi-directional communication between the control unit 200 and the unmanned aerial vehicle 100, as described above in the context of FIG. 1. In an exemplary embodiment, the communication module 208 is adapted to upload or otherwise transfer a generated flight plan to the unmanned aerial vehicle 100, as described below.

It should be understood that FIG. 2 is a simplified representation of a control unit 200 for purposes of explanation and ease of description, and FIG. 2 is not intended to limit the application or scope of the subject matter in any way. In practice, the control unit 200 may include numerous other devices and components for providing additional functions and features, as will be appreciated in the art. For example, in practice, the control unit 200 may be coupled to and/or include one or more additional modules or components as necessary to support navigation, flight planning, and other conventional unmanned vehicle control functions in a conventional manner. Additionally, although FIG. 2 depicts the control unit 200 as a standalone unit, in some embodiments, the control unit 200 may be integral with the unmanned aerial vehicle 100.

In an exemplary embodiment, the display device 202 is coupled to the processor 206, which in turn is coupled to the user interface device 204. In an exemplary embodiment, the display device 202, user interface device 204, and processor 206 are cooperatively configured to allow a user to define a flight plan for the unmanned aerial vehicle 100 by graphically identifying or designating desired surveillance targets or desired camera targets, and possibly other spatial constraints on the display device 202, as described below. The processor 206 is coupled to the database 210, and the processor 206 is configured to display, render, or otherwise convey one or more graphical representations or images of the terrain and/or objects proximate the unmanned aerial vehicle 100 on the display device 202, as described in greater detail below. In an exemplary embodiment, the processor 206 is coupled to a communication module 208 and cooperatively configured to communicate and/or upload a flight plan to the unmanned aerial vehicle 100.

In an exemplary embodiment, the display device 202 is realized as an electronic display configured to display a map of the real-world terrain and/or objects proximate the associated unmanned aerial vehicle 100, along with flight planning information and/or other data associated with operation of the unmanned aerial vehicle 100 under control of the processor 206. Depending on the embodiment, the display device 202 may be realized as a visual display device such as a monitor, display screen, flat panel display, or another suitable electronic display device. In various embodiments, the user interface device 204 may be realized as a keypad, touchpad, keyboard, mouse, touchscreen, stylus, joystick, or another suitable device adapted to receive input from a user. In an exemplary embodiment, the user interface device 204 is adapted to allow a user to graphically identify or designate desired camera targets and other spatial constraints on the map rendered on the display device 202, as described below. It should also be appreciated that although FIG. 2 shows a single user interface device 204, in practice, multiple user interface devices may be present.

The processor 206 may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this regard, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration. In practice, processor 206 includes processing logic that may be configured to carry out the functions, techniques, and processing tasks associated with the operation of the control unit 200, as described in greater detail below. Furthermore, the steps of a method or algorithm described in connection with the embodiments disclosed herein may be embodied directly in hardware, in firmware, in a software module executed by processor 206, or in any practical combination thereof.

In an exemplary embodiment, the processor 206 accesses or includes one or more databases 210 configured to support rendering a map on the display device 202, as described below. In this regard, the database 210 may be realized in memory, such as, for example, RAM memory, flash memory, registers, a hard disk, a removable disk, or any other form of storage medium known in the art. In this regard, the database 210 is coupled to the processor 206 such that the processor 206 can read information from the database 210. In some embodiments, the database 210 may be integral to the processor 206.

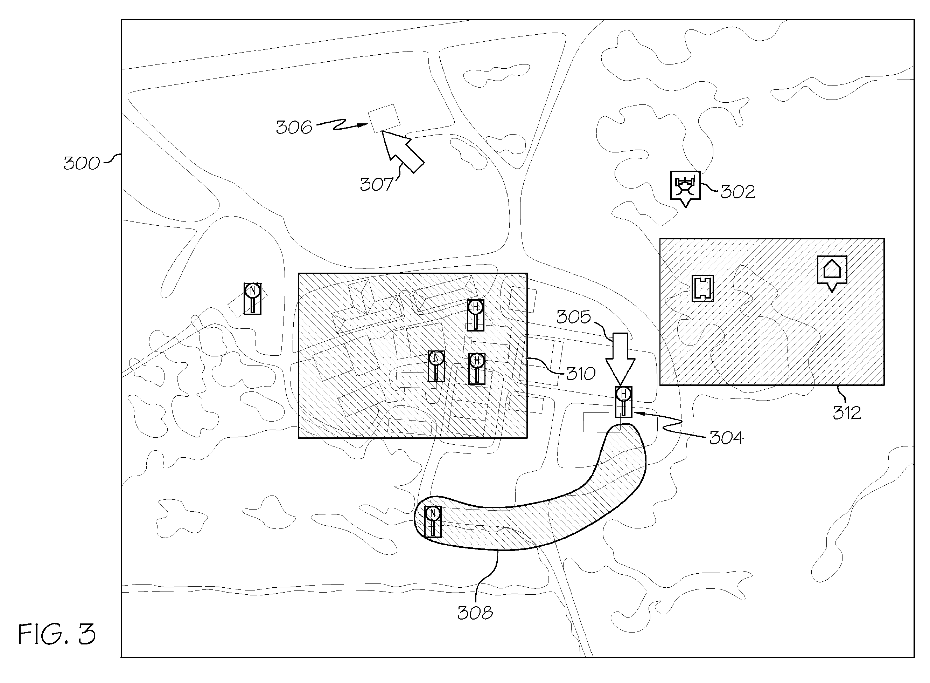

Referring now to FIG. 3, and with continued reference to FIG. 1 and FIG. 2, in an exemplary embodiment, the processor 206 includes or otherwise accesses a database 210 containing terrain data, obstacle data, elevation data, or other navigational information, such that the processor 206 controls the rendering of a map 300 of the terrain, topology, obstacles, objects, and/or other suitable items or points of interest within an area proximate the unmanned aerial vehicle 100 on the display device 202. The map 300 may be based on one or more sectional charts, topographic maps, digital maps, or any other suitable commercial or military database or map, as will be appreciated in the art. The processor 206 may also be configured to display a graphical representation of the unmanned aerial vehicle 302 at a location on the map 300 that corresponds to the current real-world location of the unmanned aerial vehicle 100. Although FIG. 3 depicts a top view (e.g., from above the unmanned aerial vehicle) of the map 300, in practice, alternative embodiments may utilize various perspective views, such as side views, three-dimensional views (e.g., a three-dimensional synthetic vision display), angular or skewed views, and the like, and FIG. 3 is not intended to limit the scope of the subject matter in any way. In an exemplary embodiment, the control unit 200 is adapted to allow a user to indicate or identify desired targets (e.g., for the camera and/or surveillance module 106) and other spatial constraints for a flight plan for the unmanned aerial vehicle 100 on the map 300, as described below.

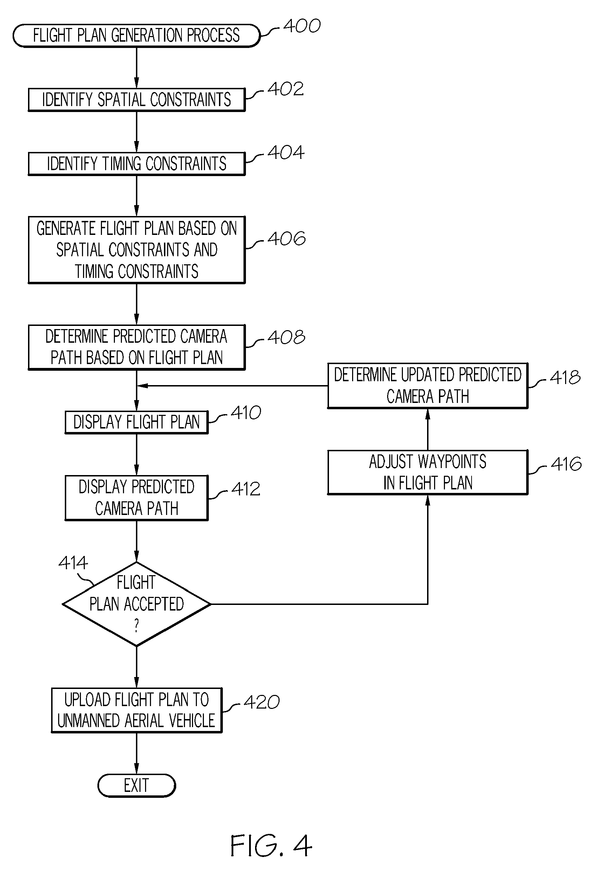

Referring now to FIG. 4, in an exemplary embodiment, a control unit 200 may be configured to perform a flight plan generation process 400 and additional tasks, functions, and operations described below. The various tasks may be performed by software, hardware, firmware, or any combination thereof. For illustrative purposes, the following description may refer to elements mentioned above in connection with FIG. 1 and FIG. 2. In practice, the tasks, functions, and operations may be performed by different elements of the described system, such as the display device 202, the user interface device 204, the processor 206, the communication module 208, or the database 210. It should be appreciated that any number of additional or alternative tasks may be included, and may be incorporated into a more comprehensive procedure or process having additional functionality not described in detail herein.

Referring again to FIG. 4, and with continued reference to FIGS. 1-3, a flight plan generation process 400 may be performed to generate or create a flight plan or travel plan for an unmanned vehicle (e.g., unmanned aerial vehicle 100) using the display device of an associated control unit (e.g., control unit 200). As used herein, a flight plan or travel plan should be understood as referring to a sequence of real-world locations or waypoints that define a proposed path for the unmanned vehicle, and may include other travel parameters, as described below. In an exemplary embodiment, the flight plan generation process 400 initializes by displaying a map of an area proximate the unmanned aerial vehicle. The flight plan generation process 400 continues by identifying one or more spatial constraints for the unmanned aerial vehicle on the map displayed on the display device (task 402). As used herein, a spatial constraint should be understood as referring to a physical location, region, or area that serves as a basis for generating the flight plan, as described below. For example, a spatial constraint may comprise a desired surveillance target or camera target for the viewing region of the camera and/or surveillance module 106 which designates a location that the unmanned aerial vehicle 100 should observe and/or traverse. Alternatively, the spatial constraint may comprise a no-fly region which designates locations or areas that the unmanned aerial vehicle 100 should not traverse and/or fly over.

For example, referring now to FIG. 3, in an exemplary embodiment, a user may utilize the map 300 displayed on the display device 202 to graphically identify a plurality of surveillance targets 304, 306, 308, 310 for the camera and/or surveillance module 106 onboard the unmanned aerial vehicle 100. For example, the control unit 200 may receive a user input that graphically identifies a first point or object 304 on the map 300 as a desired surveillance target. That is, a user may manipulate or position the user interface device 204 to select or identify the point on the map 300 that corresponds to the location of the object 304, as will be understood. In an exemplary embodiment, the flight plan generation process 400 is configured to allow the user to identify one or more viewing constraints for a desired camera target. For example, the user may designate a desired approach direction 305 for the desired camera target 304. The flight plan generation process 400 may also be configured to allow a user to designate additional viewing constraints for the desired camera target 304, such as, for example, the user may designate a minimum viewing distance (e.g., the distance between the unmanned aerial vehicle and the target 304), a desired viewing altitude (e.g., the altitude of the unmanned aerial vehicle), or a desired viewing angle for a camera and/or surveillance module 106. Similarly, the user may graphically identify an additional location on the map 300 as a desired surveillance or camera target 306 having an associated approach direction 307. The flight plan generation process 400 may also be configured to allow a user to graphically identify a region or area as a desired camera target. For example, the user may manipulate the user interface device 204 in order to paint or draw a swath 308 (e.g., using free-form drawing tools) or otherwise select an geometric area 310 that should be observed, viewed, or otherwise targeted by the camera and/or surveillance module 106. It should be appreciated that the flight plan generation process 400 is not limited to any particular number, shape, or size of surveillance targets. In an exemplary embodiment, the flight plan generation process 400 is also adapted to allow a user to identify a no-fly region 312 on the map 300 which serves as a no-fly zone for purposes of generating the flight plan, as described below.

In an exemplary embodiment, the flight plan generation process 400 continues by identifying any timing constraints for the flight plan (task 404). For example, the flight plan generation process 400 may be configured to a user to identify one or more timing constraints for each identified surveillance target. For example, the user may designate that a first surveillance target (e.g., object 304) should be observed and/or viewed at a specified time or within a specified time period (e.g., "before 10:00 AM" or "between 10:00 AM and 10:05 AM"). In accordance with one embodiment, the flight plan generation process 400 is also be configured to allow a user to input or otherwise designate a desired departure or starting time for the flight plan.

In an exemplary embodiment, the flight plan generation process 400 continues by generating a flight plan that satisfies the identified spatial constraints, viewing constraints, and timing constraints and determining a predicted camera path or predicted viewing path for the camera and/or surveillance module 106 onboard the unmanned aerial vehicle based on the flight plan (tasks 406, 408). As used herein, a predicted camera path or predicted viewing path should be understood as referring to the predicted path or region that the viewing region of the camera and/or surveillance module 106 will theoretically observe if the unmanned aerial vehicle operates in accordance with the generated flight plan. In an exemplary embodiment, the flight plan generation process 400 is configured to generate the flight plan by generating a plurality of waypoints such that at least a portion the predicted camera path overlaps the identified surveillance targets. In an exemplary embodiment, the flight plan generation process 400 is configured to take into account the physical limitations of the unmanned aerial vehicle when generating the waypoints for use as the flight plan. For example, the unmanned aerial vehicle may be limited in its ability to maneuver and/or turn or there may otherwise be some lag in maintaining camera and/or surveillance module 106 focused in a particular direction relative to the unmanned aerial vehicle 100, as will be appreciated in the art. In this regard, the flight plan generation process 400 may generate a predicted flight path for the unmanned aerial vehicle based on the generated flight plan, and determine the predicted camera path based on the predicted flight path. In other words, the tasks of generating the flight plan and determining the predicted camera path may be performed contemporaneously and/or iteratively.

In an exemplary embodiment, the plurality of waypoints for use as the flight plan are generated such that predicted flight path of the unmanned aerial vehicle does not overlap and/or travel through any areas identified as no-fly regions. If the flight plan generation process 400 is unable to generate a flight plan that satisfies the identified constraints or the flight plan is otherwise infeasible (e.g., based on fuel requirements or physical limitations of the unmanned aerial vehicle), depending on the embodiment, the flight plan generation process 400 may be configured to provide a notification to the user, reinitialize (e.g., repeat tasks 402 and 404), or terminate (or exit) the flight plan generation process 400. Ideally, the predicted camera path based on the generated flight plan will overlap the identified surveillance targets in their entirety, however, in practice, physical limitations of the unmanned aerial vehicle or other constraints may be such that the predicted camera path overlaps only a portion of one or more desired surveillance targets.

For example, referring again to FIG. 3, in an exemplary embodiment, the flight plan generation process 400 generates a plurality of waypoints such that the predicted camera path for the unmanned aerial vehicle will overlap the objects 304, 306 identified as desired surveillance targets. The waypoints are also ordered in the flight plan such that the unmanned aerial vehicle and/or predicted camera path will traverse the objects 304, 306 in the indicated approach direction 305, 307, as described below. The flight plan generation process 400 also generates waypoints such that the predicted camera path covers or overlaps the indicated target areas (e.g., swath 308 or boxed area 310), as described in greater detail below. In an exemplary embodiment, the flight plan generation process 400 generates the waypoints such that the unmanned aerial vehicle will not travel over or through the identified no-fly region 312.

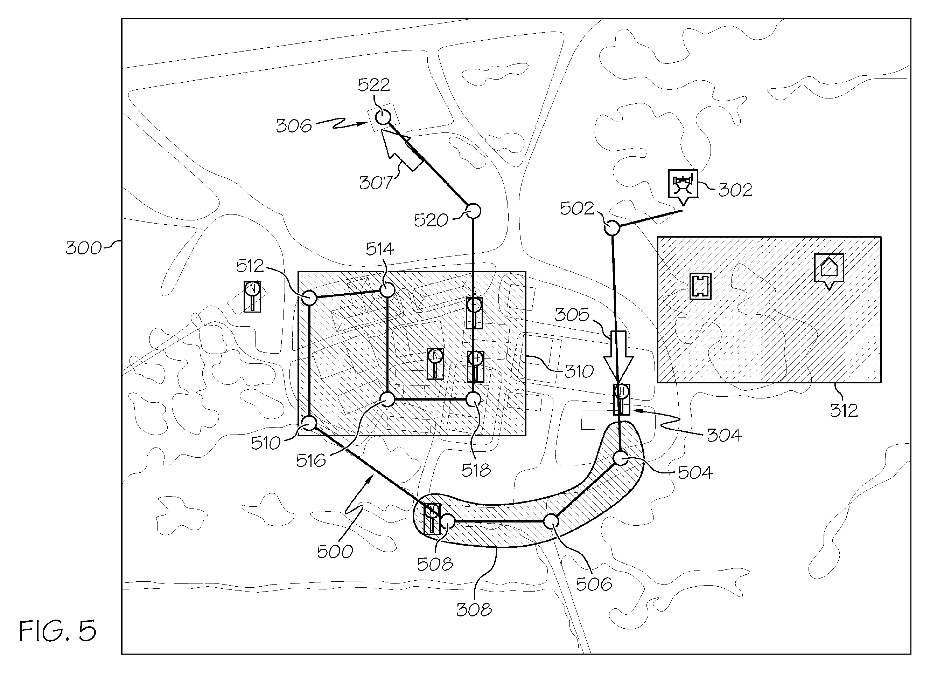

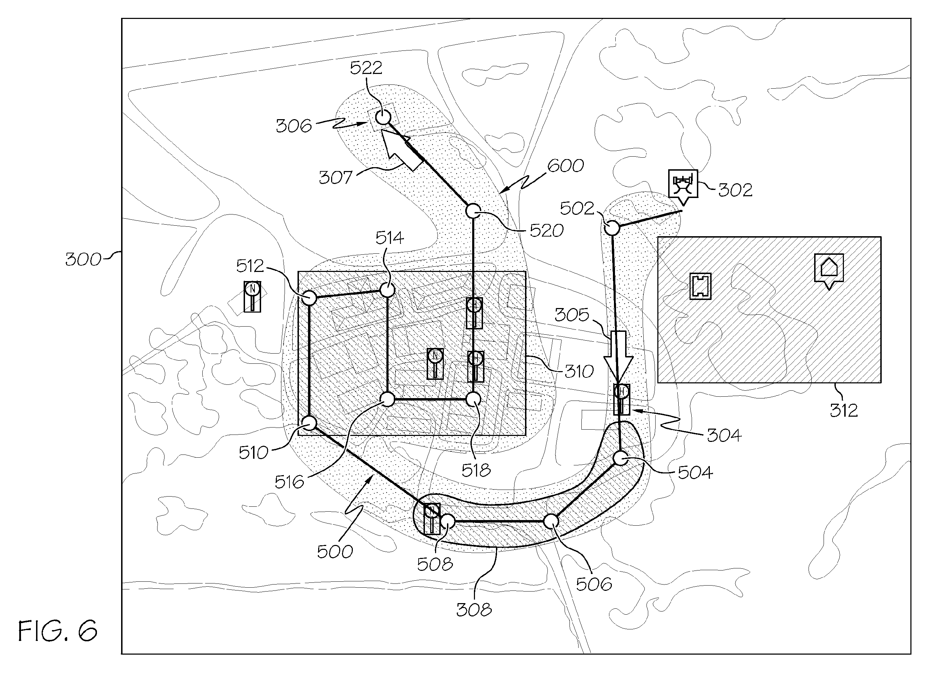

Referring again to FIG. 4, in an exemplary embodiment, the flight plan generation process 400 continues by displaying or rendering a graphical representation of the generated flight plan on the display device (task 410). For example, as shown in FIG. 5, the flight plan 500 may graphically displayed or rendered overlying the map 300 and the desired surveillance targets 304, 306, 308, 310. As shown, the flight plan generation process 400 may also display and/or render a graphical representation of the waypoints that comprise the flight plan 500, as will be understood. In an exemplary embodiment, the flight plan generation process 400 also displays or renders a graphical representation of the predicted camera path on the display device (task 412). For example, as shown in FIG. 6, the predicted camera path 600 is graphically displayed overlying the map 300. In this manner, the flight plan 500 and predicted camera path 600 are visually presented to a user in a manner that is easy to understand.

Referring to FIG. 5 and FIG. 6, with continued reference to FIGS. 1-4, as shown for an exemplary embodiment, the first waypoint 502 and second waypoint 504 of the flight plan 500 are generated such that the predicted camera path 600 overlaps the first object 304 identified as a desired surveillance target. The waypoints 502, 504 are also generated such that any identified viewing constraints associated with the camera target 304 are satisfied. For example, as shown, the waypoints 502, 504 are ordered or otherwise arranged in the flight plan such that the unmanned aerial vehicle and/or predicted camera path 600 is substantially aligned with the identified approach direction 305 at the location corresponding to the object 304 (e.g., when the latitude/longitude of the unmanned aerial vehicle is the same as the latitude/longitude of the object 304). In another embodiment, the altitude of the waypoints 502, 504 may be generated and/or determined such that the altitude of the unmanned aerial vehicle at the location corresponding to the object 304 satisfies any other viewing constraints that may have been identified and/or designated (e.g., minimum viewing distance or viewing altitude). Continuing along the flight plan 500, the second through fourth waypoints 504, 506, 508 are generated such that the predicted camera path 600 substantially covers and/or overlaps the swath 308 identifying a desired surveillance target area and satisfies, and the waypoints 504, 506, 508 are preferably generated in a manner that satisfies any other viewing constraints for the swath 308. Similarly, the fifth through tenth waypoints 510, 512, 514, 516, 518, 520 are generated such that the predicted camera path 600 substantially covers and/or overlaps the rectangular region 310. The tenth and eleventh waypoints 520, 522 are also generated such that the predicted camera path 600 overlaps object 306, and the waypoints 520, 522 are also generated and/or arranged in the flight plan such that the unmanned aerial vehicle and/or predicted camera path 600 is substantially aligned with the identified approach direction 307, as described above. It should also be noted that the waypoints of the flight plan 500 are generated such that the flight path of the unmanned aerial vehicle 302 and/or predicted camera path 600 do not overlap the no-fly region 312 identified on the map 300.

Referring again to FIG. 4, in an exemplary embodiment, the flight plan generation process 400 is configured to allow a user to determine whether or not the user wants to accept the flight plan displayed on the display device (task 414). For example, the flight plan generation process 400 may prompt a user for acceptance or otherwise be configured to display an acceptance button, icon, or other graphical object overlying the map 300. In an exemplary embodiment, if the user does not accept the flight plan that is displayed, the flight plan generation process 400 is configured to allow a user to adjust one or more waypoints in the flight plan (task 416). In this regard, the flight plan generation process 400 may be adapted to allow a user to select or otherwise identify a waypoint for modification, and subsequently select or identify a new location for the waypoint. For example, a user may manipulate the user interface device 204 to grab or select a waypoint and drag it to a new location on the map 300. In an exemplary embodiment, the flight plan generation process 400 is adapted to prevent the user from adjusting the waypoint in a manner that would violate any previously identified timing constraints or would otherwise be infeasible (e.g., based on fuel requirements or physical limitations of the unmanned aerial vehicle). In response to adjusting a waypoint, the flight plan generation process 400 continues by determining an updated predicted camera path based on the adjusted flight plan (e.g., the new set of waypoints) and displaying the updated predicted camera path on the display device (tasks 412, 418). The loop defined by tasks 412, 414, 416, and 418 may repeat as desired until the flight plan displayed on the display device is accepted.

In response to receiving a user input that identifies the flight plan is accepted, in an exemplary embodiment, the flight plan generation process 400 continues by uploading or otherwise transferring the flight plan (e.g., the order or sequence of waypoints along with any timing information) to the unmanned aerial vehicle (task 420). In this regard, the vehicle control system 102 may be configured to receive the flight plan from the control unit 200 (e.g., via communication modules 108, 208) in a conventional manner. In an exemplary embodiment, the vehicle control system 102 and navigation system 104 are cooperatively configured to fly, operate, or otherwise direct the unmanned aerial vehicle 100 through the waypoints of the flight plan during operation of the unmanned aerial vehicle 100, as will be appreciated in the art. In this manner, the generated flight plan controls autonomous operation (e.g., unmanned flight) of the unmanned aerial vehicle.

To briefly summarize, the methods and systems described above allow a user to generate a flight plan based upon desired surveillance targets. The user can quickly ascertain the predicted camera path and make fine tuned adjustments to the flight plan without the complexity of manually determining what the camera onboard the unmanned aerial vehicle may or may not be able to observe. As a result, an unskilled or untrained user can quickly and reliably create a flight plan that accomplishes the desired surveillance objectives.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It being understood that various changes may be made in the function and arrangement of elements described in an exemplary embodiment without departing from the scope of the subject matter as set forth in the appended claims.

## Claims

1. A method for generating a flight plan (500) for an aerial vehicle (100) having a surveillance module (106) using a control unit (200) having a display device (202), the method comprising:
graphically identifying, on a map (300) displayed on the display device (202), a desired target (304, 306, 308, 310) for the surveillance module (106); and
generating the flight plan (500) such that a predicted camera path (600) for the surveillance module (106) overlaps the desired target (304, 306, 308, 310).

2. The method of claim 1, wherein generating the flight plan (500) comprises generating a plurality of waypoints (502) based on the desired target (304, 306, 308, 310).

3. The method of claim 2, further comprising determining the predicted camera path (600) for the surveillance module (106) based on the plurality of waypoints (502).

4. The method of claim 3, further comprising:
graphically displaying the plurality of waypoints (502) on the display device (202); and
graphically displaying the predicted camera path (600) on the display device (202).

5. The method of claim 1, further comprising:
graphically displaying the flight plan (500) on the display device (202); and
graphically displaying the predicted camera path (600) on the display device (202).

6. The method of claim 1, further comprising uploading the flight plan (500) to the aerial vehicle (100), wherein the flight plan (500) controls autonomous flight of the aerial vehicle (100).

7. The method of claim 1, further comprising identifying a viewing constraint for the desired target (304, 306, 308, 310), wherein generating the flight plan (500) comprises generating the flight plan (500) based on the desired target (304, 306, 308, 310) and the viewing constraint.

8. The method of claim 1, further comprising determining the predicted camera path (600) for the surveillance module (106) based on the flight plan (500).

9. The method of claim 1, wherein generating the flight plan (500) comprises determining a plurality of waypoints (502) such that at least part of the predicted camera path (600) overlaps the desired target (304, 306, 308, 310).

10. A surveillance system for an aerial vehicle (100), the surveillance system comprising:
a surveillance module (106) onboard the aerial vehicle (100), the surveillance module (106) being adapted to capture surveillance data for a viewing region proximate the aerial vehicle (100); and
a control unit (200) communicatively coupled to the aerial vehicle (100), wherein the control unit (200) is configured to:
identify a desired target (304, 306, 308, 310) for the surveillance module (106);
generate a flight plan (500) for the aerial vehicle (100) such that a predicted path (600) for the viewing region overlaps the desired target (304, 306, 308, 310); and
upload the flight plan (500) to the aerial vehicle (100), wherein the flight plan (500) controls autonomous flight of the aerial vehicle (100).
